(19) **Europäisches Patentamt / European Patent Office / Office européen des brevets**

(11) **EP 4 686 996 A1**

(12) **EUROPEAN PATENT APPLICATION**

(43) Date of publication:
04.02.2026 Bulletin 2026/06

(21) Application number: 25186525.9

(22) Date of filing: 01.07.2025

(51) International Patent Classification (IPC):
**G05B 23/02** (2006.01)

(52) Cooperative Patent Classification (CPC):
**G05B 23/0256; G05B 23/0235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 31.07.2024 US 202418790274

(71) Applicant: **Schneider Electric Systems USA, Inc.**
**Foxborough, MA 02035 (US)**

(72) Inventors:
- **Alzain, Qasim Mohammed**
  **Dammam (SA)**
- **Ghizawi, Nidal Awni**
  **Al Khobar (SA)**
- **Ramatallah, Motwakil Abdallah Mohamed**
  **Al Khobar (SA)**
- **Mohamed, Abdalla Noureldin Khalil**
  **Dhahran (SA)**

(74) Representative: **Manitz Finsterwald**
**Patent- und Rechtsanwaltspartnerschaft mbB**
**Martin-Greif-Straße 1**
**80336 München (DE)**

(54) **AUTOMATED CONTROL FUNCTION BLOCK TESTING PROCEDURE**

(57) An automated control function block testing system and method configured for testing a control function block are described herein. The control function block comprises a control function block type that corresponds to a function of the control function block used for controlling a process within an industrial plant. The control function block executes one or more processes (or test cases during testing) based on the control function block type. The testing block is configured to obtain a test value based on the control function block type, and transmit the test value to the control function block for executing the test case therewith. The control function block executes the test case with the test value to generate an actual output to transmit to the testing block. The testing block compares the actual output to an expected value to gather information regarding the control function block.

**EP 4 686 996 A1**

**Description**

FIELD

The present disclosure generally relates to automated testing for control function blocks used with control programs for industrial plants.

BACKGROUND

Industrial control systems are used within industrial plants to automate plant processes. Industrial control systems generally include one or more control devices such as programmable logic controllers (PLCs) that function based on control programs developed for the devices. The control programs include control function blocks (also commonly referred to as function blocks) that serve a pivotal role in industrial control systems, as they are assembled to achieve an overall control strategy and drive plant processes to achieve desired outputs. With such importance of control function blocks, it is crucial that the control function blocks are rigorously tested to ensure correct behavior.

Current control function block testing procedures include time and resource-intensive processes done manually by a team of engineers. Consequently, current control function block testing procedures are not only time-consuming but also are often deficient in representing all possible scenarios that control function blocks may encounter, which may result in unknown behavior of the control function block behavior during plant implementation that can be harmful to productivity and safety of the plant.

SUMMARY

Aspects of the present disclosure permit an improved framework for testing control function blocks used in control systems for industrial plants.

In one aspect, a control function block testing system configured for executing a test procedure for an industrial plant comprises a control function block comprising a control function block type corresponding to a function of the control function block used for controlling a plant process. The control function block is configured to execute a test case corresponding to the control function block type. A testing block is configured to obtain a test value based on the control function block type. The testing block is further configured to transmit the test value to the control function block for executing the test case therewith, and to obtain an expected value being indicative of an expected output of the execution of the test case by the control function block using the test value. The control function block is further configured to execute the test case using the test value to generate an actual output, and to transmit the actual output to the testing block. The testing block is further configured to compare the actual output with the expected value to gather information regarding the control function block.

In another aspect, a method for testing a control function block for use in an industrial plant comprises defining a control function block type corresponding to a function of a control function block used for controlling a plant process. A test value is obtained at a testing block based on the control function block type. The testing block transmits the test value to the control function block. The control function block executes a test case using the test value to generate an actual output. The control function block transmits the actual output to the testing block. The testing block obtains an expected value being indicative of an expected output of the execution of the test case by the control function block using the test value. The testing block identifies an error in the control function block based on the actual output relative to the expected value.

In another aspect, a method for testing a control function block for use in an industrial plant comprises defining a control function block type corresponding to a function of a control function block used for controlling a plant process. A testing block obtains a plurality of test values based on the control function block type. The testing block transmits the test values to the control function block. The control function block obtains one or more test cases corresponding to the control function block type. The control function block executes the one or more test cases with each of the test values to generate actual outputs for the test values. The control function block transmits the actual outputs to the testing block. The testing block obtains expected values being indicative of an expected output of the execution of the one or more test cases by the control function block using each of the test values. The testing block compares the actual outputs to the expected values to gather information regarding the control function block.

Other objects and features will be in part apparent and in part pointed out hereinafter.

BRIEF DESCRIPTION OF THE DRAWINGS

FIG. 1 is a schematic illustration of a control function block testing system, according to an embodiment.

FIG. 2 is a schematic illustration of a testing procedure for testing a control function block, according to an embodiment.

FIG. 3 is a schematic illustration of a testing block of the system of FIG. 1, according to an embodiment.

FIG. 3A is a schematic illustration of a TestBasic block of the testing block of FIG. 3, according to an embodiment,

FIG. 3B is a schematic illustration of a Category Permissive block of the testing block of FIG. 3, according to an embodiment.

FIG. 3C is a schematic illustration of a Triggering Sequence block of the testing block of FIG. 3, according to an embodiment.

FIG. 3D is a schematic illustration of an Event Multiplexing block of the testing block of FIG. 3, according to an embodiment.

Corresponding reference characters indicate corresponding parts throughout the drawings.

DETAILED DESCRIPTION

The present disclosure relates to automated systems and methods for testing control function blocks. Control function blocks are used in industrial control systems of industrial plants to achieve an overall control strategy for the plants, and to drive plant processes to achieve desired outputs. To ensure optimal performance and prevent hazardous conditions, it is crucial that the control function blocks are tested rigorously before plant implementation. As will be explained in greater detail below, systems and methods in accordance with the present disclosure permit an improved procedure for testing control function blocks, that advantageously reduces time and resources spent on testing, reduces human error, and captures all possible scenarios a control function block may encounter in a plant.

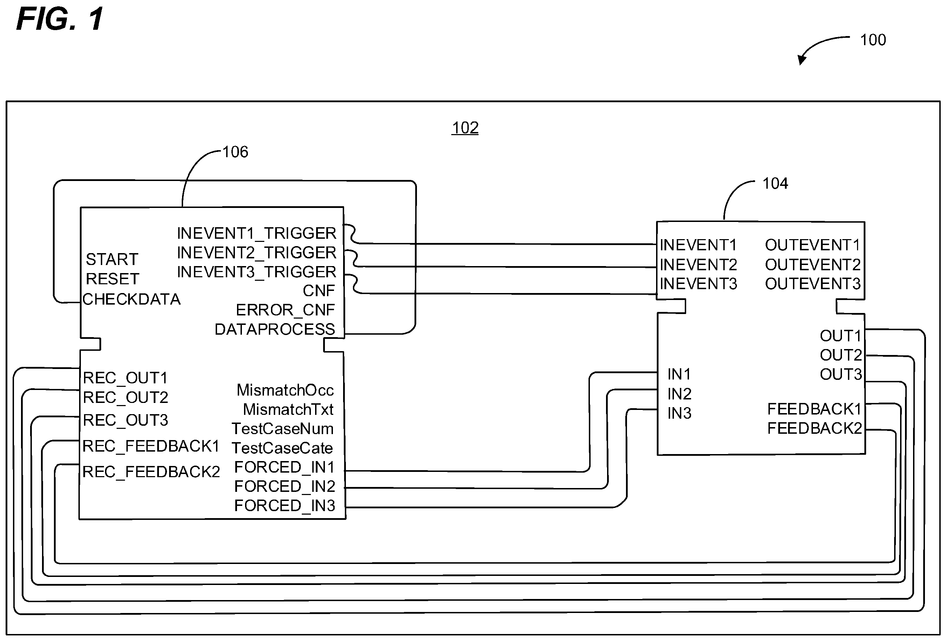

Referring now to FIG. 1, a control function block testing system in accordance with the present disclosure is generally indicated at reference number 100. The control function block testing system 100 as shown, is implemented within an integrated development environment (IDE) 102, however it will be apparent to a person of ordinary skill in the art that other implementation environments may be used without departing from the scope of the present disclosure. The control block testing system 100 broadly comprises a control function block to be tested, illustrated in FIG. 1 as an example control function block 104, and a testing block to execute the testing, illustrated in FIG. 1 as an example testing block 106. In one embodiment, the testing block 106 comprises a wrapper block described in greater detail below. The testing block 106 is configured to execute a number of test procedures to test the control function block 104 to gather information regarding the control function block 104. For example, the testing block 106 is configured to execute a number of test procedures to test the control function block 104 to determine if the control function block is functioning correctly, and whether the control function block is ready for implementation within an industrial plant. Additionally, or alternatively, the testing block 106 is configured to execute a number of test procedures to test the control function block 104 to gather statistics regarding the control function block such as operational statistics, error statistics, and resources used by the control function block. Individual components of the control function block testing system 100 will now be described before turning to exemplary control function block testing methods.

The present disclosure is compatible with any type of control function block, including but not limited to Open Process Automation Standard (OPAS) compliant control function blocks and non-OPAS compliant control function blocks. In general, the control function block 104 is used in conjunction with industrial control devices (e.g., PLCs) to perform functions to achieve desired outputs in plant processes. Accordingly, there are several different types of control function blocks 104 that are used to accommodate a variety of plant processes. In other words, each control function block 104 comprises a control function block type that corresponds to a function of the control function block used for controlling a plant process. Moreover, the control function block type corresponds to a level of testing (e.g., simple or rigorous) necessary for the control function block. Some examples of control function block types include timers, counters, analog input, analog output, and proportional integral derivative (PID).

In one embodiment, test cases corresponding to control function block types are stored in an external source such as a database. In another embodiment, the control function block 104 is configured with test cases necessary for the corresponding control function block type. In general, the control function block 104 is configured to obtain the test case(s) (e.g., internally or externally) and execute the test cases with one or more test value(s) received as input to generate one or more actual outputs. As referred to herein, an actual output refers to an event resulting from the execution of the test case by the control function block 104. For example, the actual output includes but is not limited to an output value determined by executing the test case with the test value, the time needed for execution (i.e., test runtime), or an error. Furthermore, the control function block 104 is configured to transmit the actual output(s) to the testing block 106 for further processing. In the timer control function block type example, the control function block 104 is configured to execute one or more time-dependent processes or time-dependent test cases with corresponding test values to generate one or more actual outputs to transmit to the testing block 106.

In the instance that the test case is a time-dependent test case, the control function block 104 is configured to execute an estimation function for the test case to bypass a time constraint of the time-dependent case to generate the actual output. For example, if the control function block 104 to be tested is configured to output a cumulative value over time, testing block 106 provides an estimated test value to circumvent waiting for the output to accumulate. In one example using a PID control function block, the control function block executes a number of test cases and the outputs of the execution of test cases changes over time. Accordingly, accumulated error of the outputs is determined and the PID control function block provides the accumulated error to the testing block 106 to calculate an expected value as will be described in further detail below.

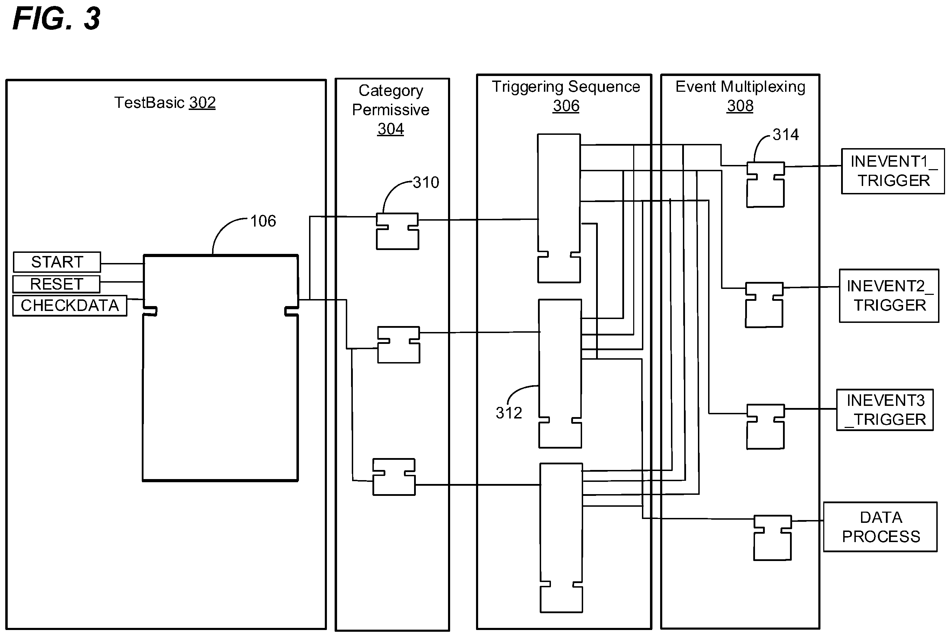

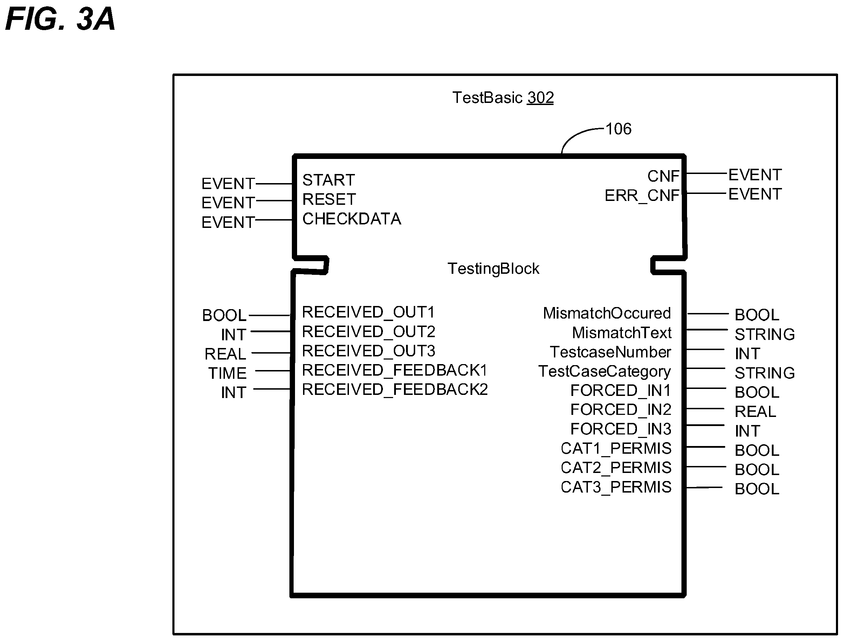

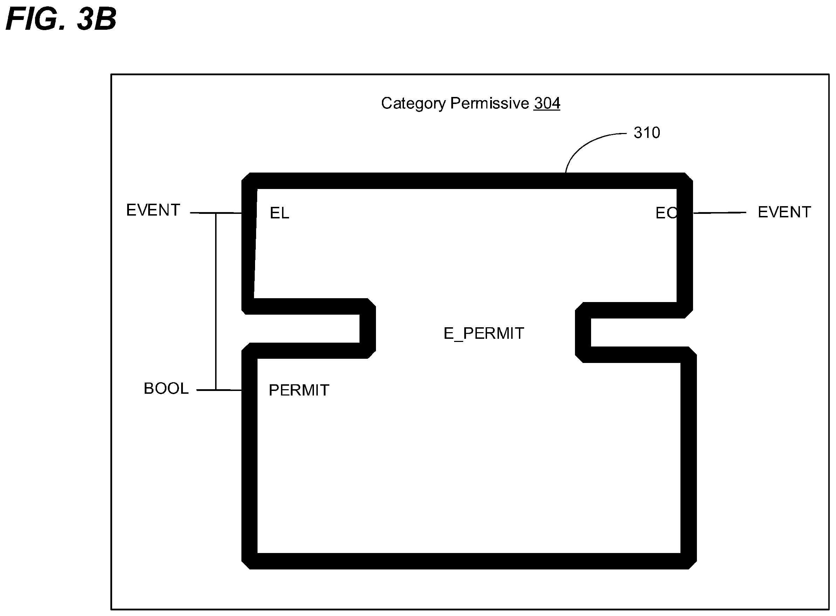

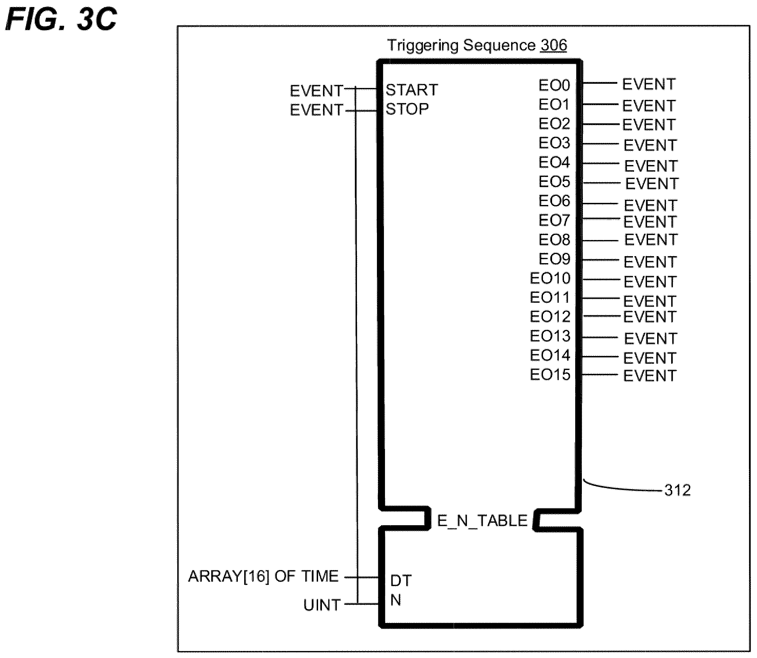

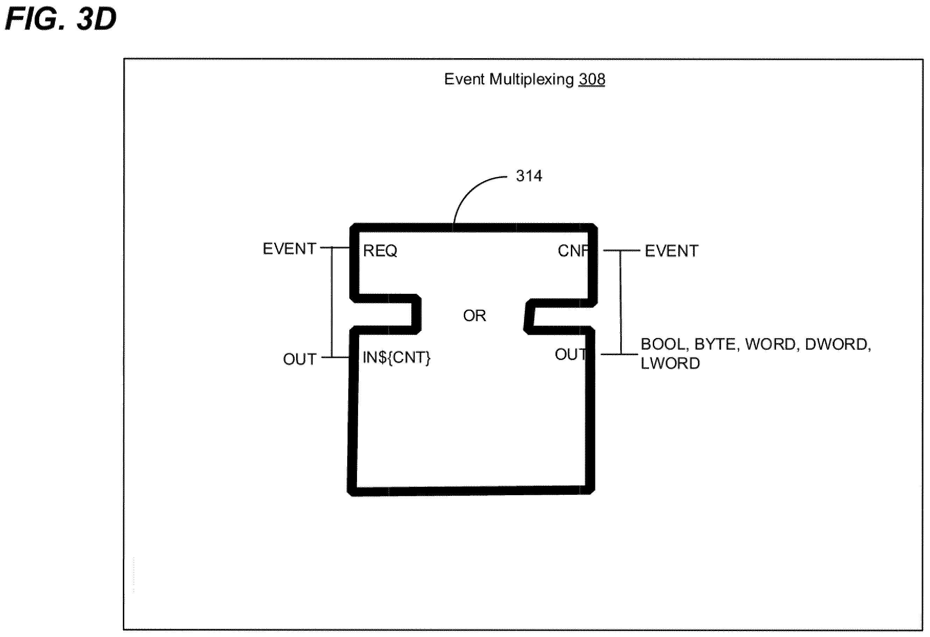

The testing block 106 is configured to implement a testing procedure to test the control function block 104. In the illustrated embodiment of FIG. 3, the testing block 106 comprises a wrapper block, however it will be apparent to a person of ordinary skill in the art that other types of architecture may be used without departing from the scope of the present disclosure. The testing block 106 receives the control function block type as an input from at least one of the control function block 104 or an external source (e.g., a database). In general, the testing block 106 is configured to obtain at least one of test case(s) associated with the control function block type, test value(s) corresponding to the test cases, and expected value(s) corresponding to the test cases. The expected value referred to herein indicates an expected output of the execution of a test case with a test value. In an exemplary embodiment, the testing block 106 receives at least one of the test case(s), test value(s), and expected value(s) from the external source. In another embodiment, the testing block 106 executes a set of instructions (e.g., logic) to generate at least one of the test value(s) and expected value(s). As briefly mentioned above, the testing block 106 is configured to transmit the test value(s) to the control function block 104 for executing the test case(s) therewith. Furthermore, the testing block 106 is configured to receive the actual output from the control function block 104, and compare the actual output with the expected value to gather information regarding the control function block (e.g., to determine whether the control function block is functioning correctly and/or gather statistics regarding the control function block).

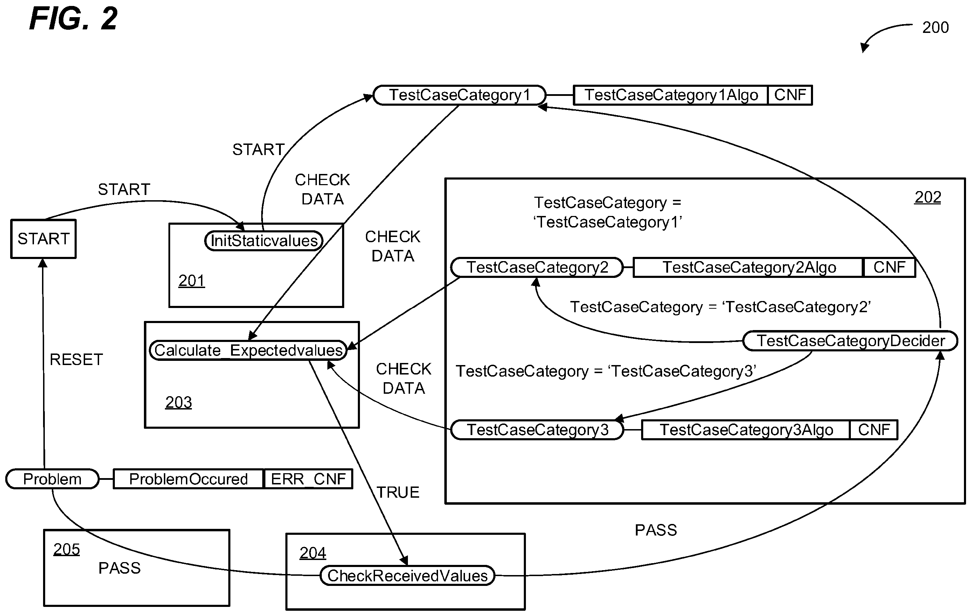

Referring now to FIG. 2, an exemplary testing procedure implemented by the testing block 106 is generally indicated at reference number 200. At 201, the testing block 106 is configured to initialize and, at 202, the testing block 106 is configured to obtain the test value (i.e., forced value) for transmission to the control function block 104. At 203, the testing block 106 is configured to obtain the expected value. At 204, the testing block 106 is configured to check the received value, (e.g., the actual output received from the control function block 104) and at 205 determine if the control function block 104 is functioning correctly.

In some test procedures, the actual outputs from the test cases are evaluated by comparing the actual outputs to the expected values as will be explained in greater detail below. However, other evaluation techniques may be used without departing from the scope of the present disclosure. For example, the actual outputs from the test cases may also be used to check for signal propagation of errors of the control function block. For example, an actual output may indicate a test runtime of the control function block 104. The testing block 106 is configured to compare the test runtime with an expected value comprising the expected test runtime to gather runtime information regarding the control function block 104, which may be indicative of an error.

One exemplary test procedure involves the testing block 106 being configured to compare the actual output to the expected value to detect a match. If a match is detected, the testing block 106 determines that the control function block 104 is functioning correctly. If a match is not recognized, the testing block 106 determines the control function block 104 is not functioning correctly. In another exemplary test procedure, the testing block 106 is configured to obtain (e.g., receive as input from an external source or execute a set of instructions to generate) a range of acceptable values based at least on a predetermined threshold for the expected value. The testing block 106 may receive the predetermined threshold for an expected value as input from an external source or may execute a set of instructions to generate the predetermined threshold for the expected value. In this embodiment, the testing block 106 is configured to compare the actual output to the range of acceptable values to detect if the actual output is within the range of acceptable values. If the actual output is within the range of acceptable values, the testing block 106 determines that the control function block 104 is functioning correctly. If the actual output is not within the range of acceptable values, the testing block 106 determines that the control function block 104 is not functioning correctly.

Upon gathering information regarding the control function block 104, (e.g., gathering statistics and/or determining that the control function block is not functioning correctly), the testing block 106 is configured to at least one of record the statistics and/or an incorrect functioning of the control function block in a database for the control function block testing system 100, and generate a user alert to alert a user of the information.

The control function block testing system 100 is configured to execute one or more additional test procedures (e.g., re-test or subsequent test) to test the control function block 104. The control function block testing system 100 comprises an automatic operating mode wherein the control function block testing system 100 is configured to automatically execute one or more additional test procedures, independent from actual outputs from previous tests. The control function block testing system 100 in one embodiment, also comprises a controlled execution operating mode wherein the control function block testing system 100 executes the additional test procedures in response to information gathered from a previous test.

In an exemplary embodiment, while in the automatic operating mode, the control function block testing system 100 is configured to execute the one or more additional test procedures to rigorously test the control function block 104, regardless of previous test results. In one example, one or more additional test procedures are performed when the control function block type indicates a rigorous testing level is necessary for the control function block 104, whereas if the control function block type indicates a simple testing level is necessary, the initial test may be sufficient without any additional test procedures. Exemplary re-test procedures will now be described.

In one embodiment, the additional test procedure comprises executing the additional test procedure (e.g., re-test or subsequent test) based on a new test value. For example, the testing block 106 is configured to obtain a new test value based on the control function block type and transmit the new test value to the control function block 104 for executing the test case therewith. The control function block 104 executes the test case with the new test value to generate a new actual output, which is then transmitted to the testing block 106. The testing block 106 is configured to obtain a new expected value indicative of a new expected output of the execution of the test case with the new test value. Moreover, the testing block 106, is configured to compare the new actual output received from the control function block 104, to the new expected value to gather information regarding the control function block (e.g., to gather statistics and/or determine whether the control function block is functioning correctly).

In another embodiment, the additional test procedure comprises executing the additional test procedure (e.g., re-test or subsequent test) based on a new test case. For example, the control function block 104 is configured to execute a new test case using the old test value to generate a new actual output. The control function block 104 transmits the new actual output to the testing block 106 for processing. Meanwhile, the testing block 106 is configured to obtain a new expected value indicative of a new expected output of the execution of the new test case with the old test value. The testing block 106 compares the new actual output received from the control function block 104, to the new expected value to gather information regarding the control function block (e.g., to gather statistics and/or determine whether the control function block is functioning correctly).

In another embodiment, the additional test procedure comprises executing the additional test procedure (e.g., re-test or subsequent test) based on a new test value and a new test case. For example, the testing block 106 is configured to obtain a new test value based on the control function block type, and transmit the new test value to the control function block 104. The control function block 104 is configured to execute a new test case using the new test value to generate a new actual output. Furthermore, the control function block 104 is configured to transmit the new actual output to the testing block 106 for processing. The testing block 106 is configured to obtain a new expected value that is indicative of a new expected output of the execution of the new test case with the new test value. Moreover, the testing block 106 is configured to compare the new actual output received from the control function block 104, to the new expected value to gather information regarding the control function block (e.g., to gather statistics and/or determine whether the control function block is functioning correctly).

Exemplary methods for executing testing procedures for testing the control function block 104 for use in the industrial plant will now be described.

In one exemplary method, in an initial step, the control function block type corresponding to the function of the control function block 104 to be tested is defined. Next, the testing block 106 obtains a test value based on the control function block type to be propagated to function block 104 (e.g., FORCED_INx). In one embodiment, the testing block 106 generates the test value, whereas in another embodiment, the testing block obtains the test value from an external source. From here, the testing block 106 transmits the test value to the control function block 104 to be tested, which triggers events in sequence to execute the logic in control function block 104 (e.g., INEVENTx_TRIGGER). The control function block 104 receives the test value, and uses the test value to execute a test case based on the control function block type. In turn, control function block 104 generates an actual output. Logic executed in the control function block 104 and the outputs are published (e.g., OUTx, FEEDBACKx). In the instance that the test case is a time-dependent test case, the control function block 104 executes an estimation function for the time-dependent test case to bypass a time constraint of the time-dependent test case to generate the actual output. The control function block 104 then transmits the actual output to the testing block 106.

The testing block 106 triggers a DATAPROCESS event in the illustrated example to propagate (e.g., REC_OUTx, REC_FEEDBACKx). While the control function block 104 is executing the test case, the testing block 106 obtains an expected value indicative of an expected output of the execution of the test case with the forced test values. Once the testing block 106 receives the actual output from the control function block 104, the testing block compares the actual output to the expected value to gather information regarding the control function block (e.g., to gather statistics and/or determine whether the control function block is functioning correctly). In other words, testing block 106 checks the received values against the calculated values. In one embodiment, the testing block 106 compares the actual output to the expected value to detect a match. If a match of the calculated and received values is detected, the testing block 106 determines that the control function block 104 is functioning correctly. If a match is not recognized, the testing block 106 determines the control function block 104 is not functioning correctly. In another embodiment, the testing block 106 obtains a range of acceptable values based at least on a predetermined threshold received as input, for the expected value. In this embodiment, the testing block 106 compares the actual output to the range of acceptable values to detect if the actual output is within the range of acceptable values. If the actual output is within the range of acceptable values, the testing block 106 determines that the control function block 104 is functioning correctly. If the actual output is not within the range of acceptable values, the testing block 106 determines that the control function block 104 is not functioning correctly. In an embodiment, testing block 106 returns to the start of the method for executing additional test procedures.

Upon comparing the actual output to the expected value to gather information regarding the control function block 104, the testing block 106 at least one of records the information in a database for the control function block testing system 100 and generates a user alert to alert a user of the information. Moreover, the testing block 106 determines if additional test procedures are necessary based at least on an operating mode indication of the control function block testing system 100 (e.g., automatic operating mode or controlled execution operating mode). In another embodiment, the testing block 106 determines if additional test procedures are necessary based on at least one of a required testing level indicated by the control block function type and if the testing block 106 determines the control function block 104 is not functioning correctly. Exemplary additional test procedures in accordance with the method will now be described.

In one embodiment, the testing block 106 executes an additional test procedure using a new test value. For example, the testing block 106 obtains a new test value based on the control function block type, and transmits the new test value to the control function block 104 for executing the test case therewith. The control function block 104 executes the test case with the new test value to generate a new actual output, which is then transmitted to the testing block 106. The testing block 106 obtains a new expected value indicative of a new expected output of the execution of the test case with the new test value. Moreover, the testing block 106, compares the new actual output received from the control function block 104, to the new expected value to gather information regarding the control function block (e.g., to gather statistics and/or to determine whether the control function block is functioning correctly).

In another embodiment, the testing block 106 executes an additional test procedure using a new test case. For example, the control function block 104 executes a new test case using the old test value to generate a new actual output. The control function block 104 transmits the new actual output to the testing block 106 for processing. Meanwhile, the testing block 106 obtains a new expected value indicative of a new expected output of the execution of the new test case with the old test value. The testing block 106 compares the new actual output received from the control function block 104, to the new expected value to gather information regarding the control function block (e.g., to gather statistics and/or to determine whether the control function block is functioning correctly).

In another embodiment, the testing block 106 executes an additional test procedure using a new test value and a new test case. For example, the testing block 106 obtains a new test value based on the control function block type and transmits the new test value to the control function block 104. The control function block 104 executes a new test case using the new test value to generate a new actual output. Furthermore, the control function block 104 transmits the new actual output to the testing block 106 for processing. The testing block 106 obtains a new expected value that is indicative of a new expected output of the execution of the new test case with the new test value. Moreover, the testing block 106 compares the new actual output received from the control function block 104, to the new expected value to gather information regarding the control function block (e.g., to gather statistics and/or to determine whether the control function block is functioning correctly).

In another exemplary method, in an initial step, the control function block type corresponding to the function of the control function block 104 to be tested is defined. Next the testing block 106 obtains a plurality of test values based on the control function block type. In one embodiment, the testing block 106 generates the test values, whereas in another embodiment, the testing block obtains the test values from an external source. From here, the testing block 106 transmits the test values to the control function block 104. The control function block 104 receives the test values and uses the test values to execute one or more test cases based on the control function block type, to generate actual outputs for the test values. In the instance that a test case is a time-dependent test case, the control function block 104 executes an estimation function for the time-dependent test case to bypass a time constraint of the time-dependent test case, to generate the actual output. The control function block 104 then transmits the actual outputs to the testing block 106.

While the control function block 104 is executing the one or more test cases with the test values, the testing block 106 obtains expected values being indicative of an expected output of the execution of the one or more test cases with each test value. Once the testing block 106 receives the actual outputs from the control function block 104, the testing block compares the actual outputs to the respective expected values to gather information regarding the control function block (e.g., to gather statistics and/or to determine whether the control function block is functioning correctly). In one embodiment, the testing block 106 compares each actual output to each expected value to detect a match. If a match is detected, the testing block 106 determines that the control function block 104 is functioning correctly. If a match is not recognized, the testing block 106 determines the control function block 104 is not functioning correctly. In another embodiment, the testing block 106 obtains a range of acceptable values based at least on a predetermined threshold received as input, for each expected value. In this embodiment, the testing block 106 compares each actual output to each respective range of acceptable values to detect if the actual output is within the range of acceptable values. If the actual output is within the range of acceptable values, the testing block 106 determines that the control function block 104 is functioning correctly. If the actual output is not within the range of acceptable values, the testing block 106 determines that the control function block 104 is not functioning correctly.

Upon gathering information regarding the control function block 104 (e.g., gathering statistics and/or determining that the control function block 104 is not functioning correctly), the testing block 106 at least one of records the information in a database for the control function block testing system 100 and generates a user alert to alert a user of the information. Moreover, the testing block 106 determines if additional test procedures are necessary based at least on the operating mode indication of the control function block testing system 100 (e.g., automatic operating mode or controlled execution operating mode), a required testing level indicated by the control block function type, and if the testing block 106 determines the control function block 104 is not functioning correctly. If the testing block 106 determines additional test procedures are necessary, the method is reexecuted with at least one of new test values and one or more new test cases.

An automated control function block testing procedure in accordance with the present disclosure will now be described. The automated control function block testing procedure comprises defining one or more control functions to be tested in a control function block. Test values are obtained to be propagated to the control function block using a wrapper testing block. The test values are capable of being generated within logic of the wrapper testing block or capable of being fed from external sources. A data process event is triggered using the wrapper testing block, and control logic is executed in the control function block in response to the triggered data process event. In another embodiment, the control logic is cyclically executed for normal function blocks that are configured to be cyclically executed. Calculated expected values are compared with outputs of the control function block. The calculated expected values are based on the test values. In response to the calculated expected values being the same as or similar to the outputs of the control function block, new test case values are generated to be propagated to the control function block for performing further testing. In an event of a mismatch between the expected values and the calculated values, it will be registered to a log to allow further analysis while continuing the rest of the test cases.

With reference to the example control function block 104 and the example testing block 106 of FIG. 1, the inputs and outputs according to one embodiment are shown below in TABLE I:

TABLE I

| Event Inputs | |
|---|---|
| START | Start testing |
| RESET | Go back to start state |
| CHECKDATA | Check received inputs with expected values |
| **Event Outputs** | |
| INEVENTx_TRIGGER | Trigger INEVENTx event in the block to be tested |
| CNF | Publish FORCED_INx to be propagated to the block to be tested |
| ERROR_CNF | Update testing status variables in case of testing discrepancy (MismatchOcc,MismatchTxt,TestCaseNum,TestCaseCate) |
| **Input Variables** | |
| REC_OUTx | Received outputs from tested block to be checked |
| REC_FEEDBACKx | Received feedback outputs that will be used in calculating the expected values |
| **Output Variables** | |
| MismatchOcc | Boolean indicator to indicate a mismatch between expected value and calculated value occurred |
| MismatchTxt | String to give more information on which variable the mismatch occurred |
| TestCaseNum | Integer shows which test case is being executed or a mismatch happened |
| TestCaseCate | Testcase Category of the test case being executed, or a mismatch happened |
| FORCED_INx | Forced parameters to be propagated to the block to be tested |

FIG. 3 illustrates core components of testing block 106 according to an embodiment, including forced values generation, expected values calculation, received values checking, diagnostics parameter modification, and category permissions determination. FIGS. 3A-3D show detailed perspectives of the components of FIG. 3 including the TestBasic block 302, Category Permissive block 304, Triggering Sequence block 306, and Event Multiplexing block 308.

In one or more embodiments, function block forced values are real values, Boolean values, or integer values. In order to generate these values, a code is written go over the possible permutations that might be chosen and to increment real values to be used in the calculations. In addition, different ranges are tested to ensure correct scaling is achieved. To simulate the Boolean values, a counter is incremented starting from zero to the maximum number of possibilities. This can be found by evaluating the following equations:

$$Max\ Possibilities\ of\ Boolean = 2^{number\ of\ Boolean\ parameters} - 1$$

As an example, if 3 Boolean parameters are to be forced, substituting into the equation:

$$Max\ Possibilities\ of\ Boolean = 2^3 - 1 = 7$$

Each parameter may be assigned to a bit in the values of the counter to be toggled (0 to 7 in this example) when the respected bit is TRUE. For integer values, the values are then incremented by 1 after going through possible permutations of the Boolean parameters (e.g., each possibility for counter value 0 to 7 for integer value 0, then for integer value 1, etc. For real values, the values are then incremented from a low scale to a high scale for each of the permutations (e.g., IN parameter is incremented by 0.5 from 0 to 2). For ranges, a number of combinations (e.g., three) are tested, such as input and output ranges are equal, input range is higher than output range, and input range is lower than output range.

In one example, the state of calculating expected value(s) includes a replica of the code being executed in the tested block to calculate the outputs. The differences are: using the generated(forced) values to calculate the expected values; and using the received feedback values. The calculated expected values are stored in internal variables to be check against the received values. For example, the equation for calculating the integral part of a PID control block is:

$$PID_{Integral} = \frac{BlockCycleTime \times Error \times Gain}{Reset}$$

To calculate the expected values, a variable (Cycle Counter) is introduced. Cycle Counter is incremented by one every time a cycle is executed in the PID(TestBlock) and is feedback to the testing block 106. In the testing block 106, the integral part is calculated:

$$PID_{Integral} = (CycleCounter_{RF}$$
$$- LastCycleCounter_{RF(PT)} \frac{BlockCycleTime_F \times Error_F \times Gain_F}{Reset_F}$$

wherein RF is Received Feedback, PT is Previous Test Case, and F is Forced.

Referring now to the Category Permissive block 304, for each test case category, a certain INEVENTx_TRIGGER is to be triggered in a specific sequence. An E_PERMIT block 310 is used to achieve triggering in the specific sequence for each test case category that will trigger this sequence. In the Triggering Sequence block 306, there is specific events sequence triggering for every test case category. In one example, an E_N_TABLE block 312 is used to achieve this. For every sequence, the last event to be processed is DATAPROCESS to check the expected outcome for each test case. In the Event Multiplexing block 308, multiple test case categories leading to the same event are triggered from different sequences to achieve multiplexing multiple sources to a single event. In this embodiment, an OR block 314 is used to connect multiple event sources to one event.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

**Claims**

1. A control function block testing system configured for executing a test procedure for an industrial plant, the control function block testing system comprising:

    a control function block comprising a control function block type corresponding to a function of the control function block used for controlling a plant process, the control function block configured to execute a test case corresponding to the control function block type; and
    a testing block configured to obtain a test value based on the control function block type, the testing block further configured to transmit the test value to the control function block for executing the test case therewith and to obtain an expected value being indicative of an expected output of the execution of the test case by the control function block using the test value;
    wherein the control function block is further configured to execute the test case using the test value to generate an actual output and to transmit the actual output to the testing block, and wherein the testing block is further configured to compare the actual output with the expected value to gather information regarding the control function block.

2. The control function block testing system of claim 1, further comprising an external source, the external source comprising system inputs, the system inputs comprising at least one of the control function block type, the test case, the test value, and the expected value, the external source being configured to transmit the system inputs to at least one of the control function block and testing block.

3. The control function block testing system of claim 1, wherein the testing block is configured to execute a set of instructions to generate at least one of the control function block type, the test case, the test value, and the expected value, or
wherein the testing block comprises a wrapper block.

4. The control function block testing system of claim 1, further comprising at least one of an automatic operating mode and a controlled execution operating mode, wherein in the automatic operating mode the control function block testing system is configured to automatically execute one or more additional test procedures independent from the information gathered regarding the control function block in a previously executed test procedure, and wherein in the controlled execution operating mode the control function block testing system is configured to execute the one or more additional test procedures in response to the information gathered regarding the control function block in the previously executed test procedure.

5. A method for testing a control function block for use in an industrial plant, the method comprising:

defining a control function block type corresponding to a function of a control function block used for controlling a plant process;
obtaining, at a testing block, a test value based on the control function block type;
transmitting, at the testing block, the test value to the control function block;
executing, at the control function block, a test case using the test value to generate an actual output;
transmitting, at the control function block, the actual output to the testing block;
obtaining, at the testing block an expected value being indicative of an expected output of the execution of the test case by the control function block using the test value; and
identifying, at the testing block, an error in the control function block based on the actual output relative to the expected value.

6. The method of claim 5, further comprising at least one of recording the error in the control function block and generating a user alert to alert a user of the error in the control function block or
further comprising re-executing the method with at least one of a new test value and a new test case.

7. The method of claim 5, wherein said identifying comprises comparing the actual output to the expected value to detect a match, such that if a match is not recognized the testing block identifies the error in the control function block, further in particular comprising re-executing the method with at least one of a new test value and a new test case.

8. The method of claim 5, further comprising obtaining at the testing block, a range of acceptable values based at least on a predetermined threshold for the expected value, and wherein said identifying comprises comparing the actual output to the range of acceptable values to detect if the actual output is within the range of acceptable values, such that if the actual output is not within the range of acceptable values the testing block identifies the error in the control function block,
further in particular comprising re-executing the method with at least one of a new test value and a new test case.

9. The method of claim 5, wherein the actual output comprises a test runtime indicating a runtime of the control function block executing the test case, and the expected value comprises an comprises an expected test runtime indicating an expected runtime of the control function block executing the test case, and wherein said identifying comprises comparing the test runtime with the expected test runtime to gather information regarding the runtime of the control function block to identify the error in the control function block.

10. The method of claim 5, wherein said obtaining, the test value and expected value comprises obtaining at least one of the test value and expected value from an external source, or

wherein said obtaining the test value and expected value comprises executing a set of instructions at the testing block to generate at least one of the test value and expected value.

11. The method of claim 5, wherein the test case is a time-dependent test case, and wherein said executing, at the control function block, the test case using the test value to generate an actual output comprises executing an estimation function for the test case to bypass a time constraint of the time-dependent test case to generate the actual output.

12. A method for testing a control function block for use in an industrial plant, the method comprising:

defining a control function block type corresponding to a function of a control function block used for controlling a plant process;
obtaining, at a testing block, a plurality of test values based on the control function block type;
transmitting, at the testing block, the test values to the control function block;
obtaining, at the control function block, one or more test cases corresponding to the control function block type;
executing, at the control function block, the one or more test cases with each of the test values to generate actual outputs for the test values;
transmitting, at the control function block, the actual outputs to the testing block;
obtaining, at the testing block, expected values being indicative of an expected output of the execution of the one or more test cases by the control function block using each of the test values; and
comparing, at the testing block, the actual outputs to the expected values to gather information regarding the control function block.

13. The method of claim 12, wherein said comparing comprises comparing each actual output to each respective expected value to detect a match, such that if a match is detected, the testing block determines that the control function block is functioning correctly and if a match is not recognized the testing block determines the control function block is not functioning correctly.

14. The method of claim 12, further comprising obtaining at the testing block, a range of acceptable values based at least on a predetermined threshold for each expected value, and wherein said comparing comprises comparing each actual output to each respective range of acceptable values to detect if the actual output is within the range of acceptable values, such that if the actual output is within the range of acceptable values the testing block determines that the control function block is functioning correctly and if the actual output is not within the range of acceptable values the testing block determines that the control function block is not functioning correctly.

15. The method of claim 12, further comprising re-executing the method with at least one of new test values and one or more new test cases.

**FIG. 1**

EP 4 686 996 A1

# FIG. 2

200

TestCaseCategory1 — TestCaseCategory1Algo | CNF

START

CHECK DATA

START

START

InitStaticvalues

201

CHECK DATA

TestCaseCategory = 'TestCaseCategory1'

202

TestCaseCategory2 — TestCaseCategory2Algo | CNF

TestCaseCategory = 'TestCaseCategory2'

Calculate_Expectedvalues

203

RESET

TestCaseCategoryDecider

CHECK DATA

TestCaseCategory = 'TestCaseCategory3'

TestCaseCategory3 — TestCaseCategory3Algo | CNF

Problem — ProblemOccured | ERR_CNF

TRUE

205

PASS

204

CheckReceivedValues

PASS

EP 4 686 996 A1

# FIG. 3

TestBasic 302

START
RESET
CHECKDATA

106

Category Permissive 304

310

312

Triggering Sequence 306

Event Multiplexing 308

314

INEVENT1_ TRIGGER

INEVENT2_ TRIGGER

INEVENT3 _TRIGGER

DATA PROCESS

EP 4 686 996 A1

# FIG. 3A

TestBasic 302

106

TestingBlock

| Input type | Input | Output | Output type |
|---|---|---|---|
| EVENT | START | CNF | EVENT |
| EVENT | RESET | ERR_CNF | EVENT |
| EVENT | CHECKDATA | | |
| BOOL | RECEIVED_OUT1 | MismatchOccured | BOOL |
| INT | RECEIVED_OUT2 | MismatchText | STRING |
| REAL | RECEIVED_OUT3 | TestcaseNumber | INT |
| TIME | RECEIVED_FEEDBACK1 | TestCaseCategory | STRING |
| INT | RECEIVED_FEEDBACK2 | FORCED_IN1 | BOOL |
| | | FORCED_IN2 | REAL |
| | | FORCED_IN3 | INT |
| | | CAT1_PERMIS | BOOL |
| | | CAT2_PERMIS | BOOL |
| | | CAT3_PERMIS | BOOL |

EP 4 686 996 A1

# FIG. 3B

EP 4 686 996 A1

Category Permissive 304

310

EVENT — EL

EC — EVENT

E_PERMIT

BOOL — PERMIT

**FIG. 3C**

Triggering Sequence <u>306</u>

| Input | | Output |
|---|---|---|
| EVENT — START | EO0 — EVENT | |
| EVENT — STOP | EO1 — EVENT | |
| | EO2 — EVENT | |
| | EO3 — EVENT | |
| | EO4 — EVENT | |
| | EO5 — EVENT | |
| | EO6 — EVENT | |
| | EO7 — EVENT | |
| | EO8 — EVENT | |
| | EO9 — EVENT | |
| | EO10 — EVENT | |
| | EO11 — EVENT | |
| | EO12 — EVENT | |
| | EO13 — EVENT | |
| | EO14 — EVENT | |
| | EO15 — EVENT | |

— 312

E_N_TABLE

ARRAY[16] OF TIME — DT

UINT — N

EP 4 686 996 A1

# FIG. 3D

Event Multiplexing <u>308</u>

314

EVENT — REQ ⌐ CNF — EVENT

OR

OUT — IN${CNT} OUT ⌐ BOOL, BYTE, WORD, DWORD, LWORD

Europäisches
Patentamt

European
Patent Office

Office européen
des brevets

# EUROPEAN SEARCH REPORT

**Application Number**

EP 25 18 6525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 43 20 528 A1 (MITSUBISHI ELECTRIC CORP [JP]) 23 December 1993 (1993-12-23) * column 1 - column 9; claim 11; figure 3 * ----- | 1-15 | INV. G05B23/02 |
| X | US 2006/050645 A1 (CHAPPELL CHRISTOPHER L [US] ET AL) 9 March 2006 (2006-03-09) * paragraph [0026] - paragraph [0047]; figure 5 * ----- | 1-15 | |
| X | US 2005/251768 A1 (IIMA TOMOFUMI [JP]) 10 November 2005 (2005-11-10) * paragraphs [0002] - [0012], [0050] - [0051]; claims 1-8 * ----- | 1-15 | |

|  |
|---|
| TECHNICAL FIELDS SEARCHED (IPC) |
| G05B |

The present search report has been drawn up for all claims

| Place of search | Date of completion of the search | Examiner |
|---|---|---|
| Munich | 12 December 2025 | Rakoczy, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6525

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | Publication date | Patent family member(s) | | Publication date |
|---|---|---|---|---|---|
| DE 4320528 | A1 | 23-12-1993 | DE | 4320528 A1 | 23-12-1993 |
| | | | JP | H063424 A | 11-01-1994 |
| US 2006050645 | A1 | 09-03-2006 | NONE | | |
| US 2005251768 | A1 | 10-11-2005 | JP | 2005321861 A | 17-11-2005 |
| | | | US | 2005251768 A1 | 10-11-2005 |

EPO FORM P0459

For more details about this annex : see Official Journal of the European Patent Office, No. 12/82